# EUROPÄISCHE PATENTSCHRIFT

(11) **EP 0 360 996 B1**
(45) Veröffentlichungstag und Bekanntmachung des Hinweises auf die Patenterteilung: **03.11.1993**
(21) Anmeldenummer: 89113201.1
(22) Anmeldetag: 19.07.1989
(51) Int. Cl.: G01L 5/28

(54) **Prüfstand für Kraftfahrzeuge, insbes. Bremsprüfstand für Fahrzeuge mit ABS-Bremsanlagen**
Test bank for motor vehicles, especially for testing the brakes of vehicles provided with an ABS system
Banc d'essai pour véhicules, notamment banc d'essai des freins de véhicules équipés d'un système d'antiblocage

(30) Priorität: 29.09.1988 DE 3833021; 08.07.1989 DE 3922570
(43) Veröffentlichungstag der Anmeldung: 04.04.1990
(73) Patentinhaber: Rheinisch-Westfälischer Technischer Überwachungs-Verein e.V., 45138 Essen (DE)
(72) Erfinder: Rohtmann, Werner, Dipl.-Ing., D-4300 Essen 1 (DE); Meckelburg, Hans Jürgen, Dr.-Ing., D-5600 Wuppertal (DE)
(74) Vertreter: Honke, Manfred, Dr.-Ing.

(56) Entgegenhaltungen:
- EP-A- 0 246 606
- EP-A- 0 280 343
- EP-A- 0 280 785
- GB-A- 1 095 540
- ZEV GLASERS ANNALEN, Band 112, Nr. 5, Mai 1988, Seiten 176-184; W. HENDRICHS: "Dimensionierung und Vergleichbarkeit von Schwungmassenreibungsprüfständen"
- AUTOMOBILTECHNISCHE ZEITSCHRIFT, Band 70, Nr. 2, 1968, Seiten 52-59; R. HOMANN et al.: "Fahrzeugprüfstände - Bauarten und Erfahrungen aus Konstruktion und Anwendung"

## Beschreibung

Die Erfindung betrifft einen Prüfstand für Kraftfahrzeuge, insbes. Bremsprüfstand für Kraftfahrzeuge mit ABS-Bremsanlagen, mit an jedes Fahrzeugrad anlegbarer Treibrolle und Stützrolle, wobei den Treibrollen ein jeweils in seiner Schlupfcharakteristik einstellbares Schlupfelement zur bremsmomentenabhängigen Änderung des Antriebsmomentes zwischen Fahrzeugrad und Treibrolle unter Aufrechterhaltung der Haftbedingungen zwischen Fahrzeugrad und Treibrolle zugeordnet ist.

Aus der EP-A2-02 46 606 sind Bremsprüfstände der eingangs beschriebenen Ausführungsform zur Funktionsprüfung von Fahrzeug-Bremsanlagen mit ABS-System bekannt, bei denen durch Betätigung der Fahrzeugbremse ein Schlupf zwischen Fahrzeugrad und Antrieb bewirkt wird. Im einzelnen wird ohne Änderung der Haftbedingungen zwischen Fahrzeugrad und Treibrolle das auf das Fahrzeug wirkende Antriebsmoment der Treibrolle in Abhängigkeit eines auf das Fahrzeugrad wirkenden Bremsmomentes zur Simulation eines Schlupfes verändert. Die Änderung des Antriebsmomentes unter Einwirkung des Bremsmomentes entspricht im wesentlichen vorgebbaren Haft- und Schlupfbedingungen zwischen Fahrzeugrad und Fahrbahn. Anstelle eines tatsächlichen Schlupfes zwischen Fahrzeugrad und Treibrolle wird antriebsseitig ein Schlupf simuliert. Wenn dem Bremsmoment ein nicht ausreichendes Antriebsmoment am Fahrzeugrad gegenübersteht, erfolgt ein Drehzahlabfall am Fahrzeugrad, welcher dem Drehzahlabfall entspricht, auf den das Ansprechen der ABS-Bremsanlage ausgelegt ist. Mit Hilfe des Schlupfelementes läßt sich eine Schlupfcharakteristik für unterschiedliche Fahrbahnverhältnisse, wie beispielsweise trockene Fahrbahn, nasse Fahrbahn, vereiste Fahrbahn usw. verwirklichen, so daß es möglich ist, die Bremsvorgänge ohne Verschleiß und reproduzierbar sowie unabhängig von äußeren Einflüssen bei den jeweiligen Fahrbahnoberflächen zu simulieren. Voraussetzung dafür ist es, daß beim Erzeugen des Bremsmomentes das Antriebsmoment in den zu untersuchenden Drehzahlbereichen den gleichen Verlauf wie die empirisch ermittelten Schlupfcharakteristiken für die jeweiligen Fahrbahnoberflächen aufweist. - Bei dem bekannten Bremsprüfstand für Fahrzeuge mit ABS-Bremsanlagen ist für jedes Fahrzeugrad eine Treibrolle mit einem eigenen Antriebsmotor vorgesehen. Das ist in anlagentechnischer Hinsicht aufwendig. Im einzelnen kann die Einrichtung zur schlupfabhängigen Änderung des Antriebsmomentes durch einen elektrischen Asynchronmotor als Antriebsmotor gebildet werden. Es besteht aber auch die Möglichkeit, als Einrichtung zur bremsmomentenabhängigen Änderung des Antriebsmomentes zwischen dem Antriebsmotor und der Treibrolle eine steuerbare Magnetpulverkupplung als Schlupfelement mit einstellbarer Schlupfcharakteristik anzuordnen. Durch diese Maßnahmen wird der anlagentechnische Aufwand vergrößert.

Außerdem kennt man aus der EP-A2-02 80 785 ein Bremsprüfstand für Kraftfahrzeuge, insbes. PKW mit ABS-Bremsanlagen, bei dem die Prüfrollensätze miteinander gekoppelt sind. Diese Prüfrollensätze sind entweder antriebsfrei ausgebildet oder an einen gemeinsamen Antriebsmotor angeschlossen. Der bekannte Prüfstand dient hauptsächlich zur Auswertung von Radgeschwindigkeitsverläufen und nicht von Bremskraffverläufen. Dadurch soll die Ermittlung der Bremswirkung von ABS-Bremsanlagen in einfacher, funktionsgerechter und exakter Weise ermöglicht werden. Insgesamt erfolgt die Bewertung der ABS-Funktion über den Radschlupf, wobei allerdings in ihrer Schlupfcharakteristik einstellbare Schlupfelemente zu bremsmomentenabhängigen Änderung des Antriebsmomentes zwischen Fahrzeugrad und Treib- bzw. Prüfrolle nicht vorgesehen sind. Vielmehr werden die Prüfrollensätze bzw. ihre Prüfrollen von einer gemeinsamen Leistungsbremse beaufschlagt. Dadurch, daß eine Kontrolle und Bewertung der ABS-Funktion bzw. die Ermittlung der Bremswirkung von ABS-Bremsanlagen über die Kontrolle und Bewertung des Radschlupfes erfolgt, tritt ein Radschlupf zwischen dem Fahrzeugrad und der Treibrolle auf, so daß dadurch die Reifenoberfläche in Mitleidenschaft gezogen wird. Daneben ist ein elektrischer Antriebsmotor mit hoher Leistung erforderlich, können darüber hinaus die Betriebsbedingungen im wichtigsten Einsatzbereich eines automatischen Blockierverhinderers, nämlich bei nasser Fahrbahn oder Eisglätte, nicht nachgebildet werden.

Endlich ist aus der EP-A1-0 280 343 ein Fahrzeugprüfstand bekannt, der in anlagentechnischer Hinsicht außerordentlich aufwendig ist, weil jedem Rollenpaar ein eigener Antriebsmotor zugeordnet ist und weiterhin für sämtliche Rollenpaare ein weiterer gemeinsamer Antriebsnotor vorgesehen ist. Darüber hinaus arbeitet auf jedes Rollenpaar eine Bremse, jedoch sind auch in diesem Fall keine in ihrer Schlupfcharakteristik einstellbaren Schlupfelemente zur bremsmomentenabhängigen Änderung des Antriebsmomentes vorgesehen. Vielmehr sollen mit Hilfe der einzelnen Antriebsmotoren und Bremsen positive und negative Bremskräfte erzeugt werden.

Der Erfindung liegt die Aufgabe zugrunde, einen Prüfstand für Kraftfahrzeuge, insbes. Bremsprüfstand für Fahrzeuge mit ABS-Bremsanlagen, der eingangs beschriebenen Art zu schaffen, der sich in anlagentechnischer Hinsicht durch reduzierte und in funktioneller Hinsicht durch optimierte Bauweise auszeichnet.

Diese Aufgabe löst die Erfindung bei einem gattungsgemäßen Prüfstand dadurch, daß die Treibrollen miteinander gekoppelt und während eines simulierten Bremsvorganges über Schwungmassen rotierender Teile des Prüfstandes antreibbar sind, wobei für die Treibrollen ein gemeinsames Antriebselement vorgesehen ist, und daß die Schlupfelemente als unabhängig voneinander steuerbare elektrische oder hydraulische Maschinen ohne Antriebsfunktion für die Treibrollen mit Differentialgetriebe oder als unabhängig voneinander steuerbare elektrische Maschinen ohne Antriebsfunktion mit Schleifringübertrager ausgebildet sind. Nach einer bevorzugten Ausführungsform der Erfindung sind die Treibrollen von dem Fahrzeugmotor des auf den Bremsprüfstand befindlichen Fahrzeuges auf Prüfgeschwindigkeit beschleunigbar und dadurch über die Schwungmassen der rotierenden Teile angetrieben, so daß eigene Antriebsmotoren nicht erforderlich sind. Im Rahmen der Erfindung besteht allerdings auch die Möglichkeit, daß für sämtliche Treibrollen - unabhängig von dem jeweils zu prüfenden Fahrzeug - ein gemeinsamer Antriebsmotor vorgesehen ist. Auch bei dieser Ausführungsform wird in anlagentechnischer Hinsicht noch eine erhebliche Vereinfachung erreicht. - Jedenfalls haben die Maßnahmen der Erfindung zur Folge, daß über die voneinander unabhängig steuerbaren Maschinen die Schlupfcharakteristik auch während des Bremsvorganges für jedes Fahrzeugrad verändert werden kann, beispielsweise:
- Reibverteilung, d. h. links/rechts unterschiedlich griffige Fahrbahnoberflächen,
- Reibsprünge, d. h. plötzliche Wechsel des Reibwertes von hoch auf niedrig oder umgekehrt.

Durch Simulation der Reibwertteilung läßt sich die Funktion einer "Select-low"- oder "Select-high"-Regelung eines ABS nachweisen. Select-low-Regelung meint, daß der Bremsdruck der betreffenden Fahrzeugachse entsprechend dem auf dem niedrigen Reibwert (glatte Fahrbahnoberfläche) laufenden Fahrzeugrad geregelt wird. Bei Select-high-Regelung wird entsprechend dem auf dem hohen Reibwert laufenden Fahrzeugrad geregelt. Das gelingt dadurch, daß die den jeweiligen Fahrzeugrädern zugeordneten elektrischen oder hydraulischen Maschinen gesteuert werden. Bei diesen Maschinen kann es sich um Wirbelstrombremsen handeln, deren Kennlinien mittels des Erregerstroms auf unterschiedliche Schlupfcharakteristiken in Abhängigkeit von vorgegebenen Reibwerten zwischen Fahrzeugrad und Fahrbahnoberfläche eingestellt werden können. Dadurch, daß beim Bremsvorgang auf dem Prüfstand von einer bestimmten Ausgangsgeschwindigkeit bis zum Stillstand heruntergebremst wird, läßt sich die Wirkungsschwelle des ABS ermitteln, nämlich feststellen, bis zu welcher Fahrzeuggeschwindigkeit das ABS wirksam ist.

Weitere erfindungswesentliche Merkmale sind im folgenden aufgeführt. So sieht die Erfindung vor, daß die Wirbelstrombremsen jeweils zwischen den Treibrollen und ihren Antriebswellen angeordnet sind. Nach einer anderen Ausführungsform der Erfindung, der selbständige Bedeutung zukommt, ist vorgesehen, daß die Wirbelstrombremsen getrennt von den Treibrollen installiert sind und jede Wirbelstrombremse unter Zwischenschaltung eines Differentialgetriebes auf die zugeordnete Treibrolle einwirkt, wobei das Differentialgetriebe einerseits an die Treibrolle, andererseits an ihre Antriebswelle angeschlossen und von der Wirbelstrombremse beaufschlagt ist. Auf diese Weise lassen sich die Wirbelstrombremsen nach außen verlegen und unabhängig von den Treibrollen installieren, beispielsweise am Prüfstandrahmen befestigen. Dadurch brauchen die Gehäuse der Wirbelstrombremsen nicht mit den Antriebswellen zu rotieren und Schleifringübertrager können entfallen wie sie bei Einsatz der Wirbelstrombremsen zwischen den Treibrollen und ihren Antriebswellen erforderlich sind. Darüber hinaus ist durch Auswahl der Übersetzung ein weiter Bereich der Betriebsdrehzahlen der Wirbelstrombremsen möglich, was der Erzeugung bestimmter Kennlinien dienlich ist.

Nach einem weiteren Vorschlag der Erfindung mit selbständiger Bedeutung ist vorgesehen, daß antriebsseitig an jede Treibrolle ein in Abhängigkeit von ihrer Umlaufgeschwindigkeitsänderung geregelter Antrieb zur Schwungmassenkompensation der mit der Treibrolle rotierenden Teile angeschlossen ist. In diesem Zusammenhang geht die Erfindung von der Erkenntnis aus, daß zu große Schwungmassen die Regeleigenschaften eines ABS verändern, sich jedoch in der beanspruchten Weise eliminieren lassen, so daß sich im wesentlichen wirklichkeitsnahe Verhältnisse verwirklichen lassen. Diese Schwungmassenkompensation kann aber auch durch entsprechende Regelung der Wirbelstrombremsen erreicht werden.

Die Wirbelstrombremsen können jeweils mit einer Drehmomentmeßeinrichtung ausgerüstet werden. Dadurch kann im Wege der Messung des jeweiligen Antriebsmomentes der Bremskraftverlauf ermittelt werden, der zusätzlich zur Beurteilung der ABS-Funktion dienen kann. Weiterhin kann diese Meßgröße zur Unterstützung der Regelung der Wirbelstrombremse auf eine vorgegebene Kennlinie benutzt werden.

Im Ergebnis wird ein Bremsprüfstand für Kraftfahrzeuge, insbes. für Fahrzeuge mit ABS-Bremsanlagen verwirklicht, der sich in anlagentechnischer Hinsicht durch reduzierte Bauweise und in funktioneller Hinsicht durch optimale Bauweise auszeichnet, weil eine optimierte Nachbildung der Bremsvorgänge auf einer Fahrbahn durch definierte Schlupfcharakteristiken erreicht werden kann.

Nach einer weiterentwickelten Ausführungsform der Erfindung mit selbständiger Bedeutung ist vorgesehen, daß der Prüfstand als Fahrsimulator ausgebildet ist und dazu an die Schlupfelemente Drehmomentsensoren und an die Stützrollen Drehzahlsensoren angeschlossen sind, daß auf die Antriebswellen für die Treibrollen ein steuerbarer Energiespeicher mit einer mechanischen Schwungmasse sowie einem Antriebs- und Bremselement arbeitet, und daß ein elektronisches Steuergerät die Signale der Drehmomentsensoren und Drehzahlsensoren empfängt und in Abhängigkeit von den verarbeiteten Signalen die Schlupfelemente und das Antriebs-und Bremselement des Energiespeichers steuert. Durch diese Maßnahmen der Erfindung sind die Treibrollen nicht nur über die Schlupfwelle miteinander, sondern auch mit einem gemeinsamen Energiespeicher gekoppelt. Im Rahmen der Erfindung kann die Koppelung der Treibrollen nicht nur mechanisch, sondern auch elektrisch (elektrische Welle) oder hydraulisch ausgeführt sein. Die mit den Drehzahlsensoren ausgerüsteten Stützrollen erfüllen die Funktion von Tastrollen. Die Schlupfelemente übertragen ein in Abhängigkeit von der Drehzahldifferenz zwischen jeweils Treibrolle und Antriebswelle vorgegebenes Moment. - Weiter sieht die Erfindung vor, daß der Fahrsimulator einen Ventilator zur Fahrwindsimulation aufweist, und daß der Ventilator ebenfalls von dem elektronischen Steuergerät in Abhängigkeit von den verarbeiteten Signalen der Drehmomentsensoren und Drehzahlsensoren gesteuert ist. Um einen einstellbaren Achsabstand zu ermöglichen, kann der Energiespeicher über eine längenverstellbare Zentralwelle unter Zwischenschaltung von Differentialgetrieben die Antriebswellen der Treibrollen antreiben.

Mit Hilfe des erfindungsgemäßen Fahrsimulators können sämtliche dynamischen und stationären Fahrzustände bei Geradeausfahrt unter vorgegebenen Fahrbahnbedingungen mit jedem beliebigen Fahrzeug simuliert werden. Das wird durch eine individuelle Einstellung der Schlupfbedingungen für jedes Rad und durch den steuerbaren Energiespeicher erreicht. Durch die individuell einstellbaren Schlupfelemente können nachgebildet werden:
- jede beliebige Fahrbahn (Kraftschluß-Schlupf-Bedingungen)
- Fahrbahnübergänge (Reibwertsprünge)
- Fahrbahnen mit links und rechts unterschiedlicher Griffigkeit (µ-Split)
- statische Achslastveränderung (z. B. durch Berg- und Talfahrt oder Anhängerbetrieb)
- dynamische Achslastveränderung in Abhängigkeit von Verzögerung oder Beschleunigung
- Kompensation der unmittelbar mit dem Fahrzeugrad rotierenden Massen des Fahrsimulators

Durch Steuerung des Energiespeichers können nachgebildet werden:
- äquivalente Fahrzeugschwungmasse
- Fahrwiderstände (Roll-, Steigungs- und Luftwiderstand)

Durch die Fahrtwindsimulation wird eine geschwindigkeitsabhängige Kühlung der Bremsen und des Fahrzeugmotors erreicht.

Durch die beschriebenen Funktionen ist der erfindungsgemäße Fahrsimulator für folgende Anwendungen geeignet:
a) Anwendungsgebiet "Antreiben"
   - Messung der Motor- oder Radleistung
   - Messung des Beschleunigungsvermögens
   - Ermittlung der Traktion auf verschiedenen Fahrbahnen
   - Funktions- und Wirkungsprüfung von AntriebsschlupfRegelsystemen (ASR) bei beliebigen Fahrbahnbedingungen
   - Simulation von Anfahrvorgängen mit Anhängelast
   - Untersuchung von Allrad-Antriebsystemen
   - Simulation beliebiger Fahrzyklen für Emissionstest
b) Bereich "Bremsen"
   - Messung von Verzögerung und Bremsweg unter beliebigen Fahrbahnbedingungen
   - Funktionsprüfung von ABS-Systemen unter beliebigen Fahrbahnbedingungen einschl. Fahrbahnwechsel (µ-Sprung) und Reibwertteilung (µ-Split)
   - Prüfung der Bremskraftverteilung auf Vorder- und Hinterachse bei gleichzeitiger Messung der Kraftschlußausnutzung
   - Simulation von Dauerbremsung bei Talfahrt
   - Bremsprüfung bei Fahrzeugen mit Allradantrieb

Im folgenden wird die Erfindung anhand einer lediglich ein Ausführungsbeispiel darstellenden Zeichnung näher erläutert; es zeigen:
- Fig. 1: einen erfindungsgemäßen Prüfstand als Bremsprüfstand in schematischer Seitenansicht,
- Fig. 2: den Gegenstand nach Fig. 1 in Ansicht von oben ohne Fahrzeug,
- Fig. 3: einen Axialschnitt durch eine Treibrolle mit angedeuteter Wirbelstrombremse,
- Fig. 4: einen Axialschnitt durch eine Treibrolle mit nach außen verlegter Wirbelstrombremse,
- Fig. 5: in einem Diagramm die Kennlinie einer Wirbelstrombremse,
- Fig. 6: in einem Diagramm die Regelung einer Wirbelstrombremse auf vorgegebene Schlupfbedingungen,
- Fig. 7: einen erfindungsgemäßen Prüfstand als Fahrsimulator in schematischer Darstellung,
- Fig. 8: eine Ausführungsform der Schlupfelemente in schematischer Darstellung und
- Fig. 9: eine andere Ausführungsform der Schlupfelemente in schematischer Darstellung.

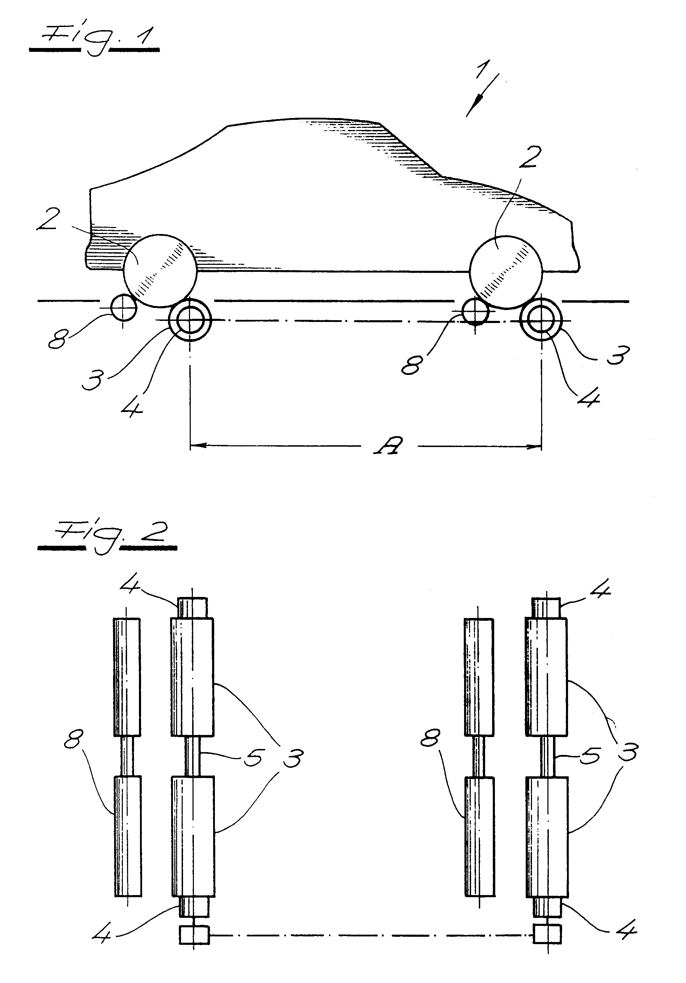

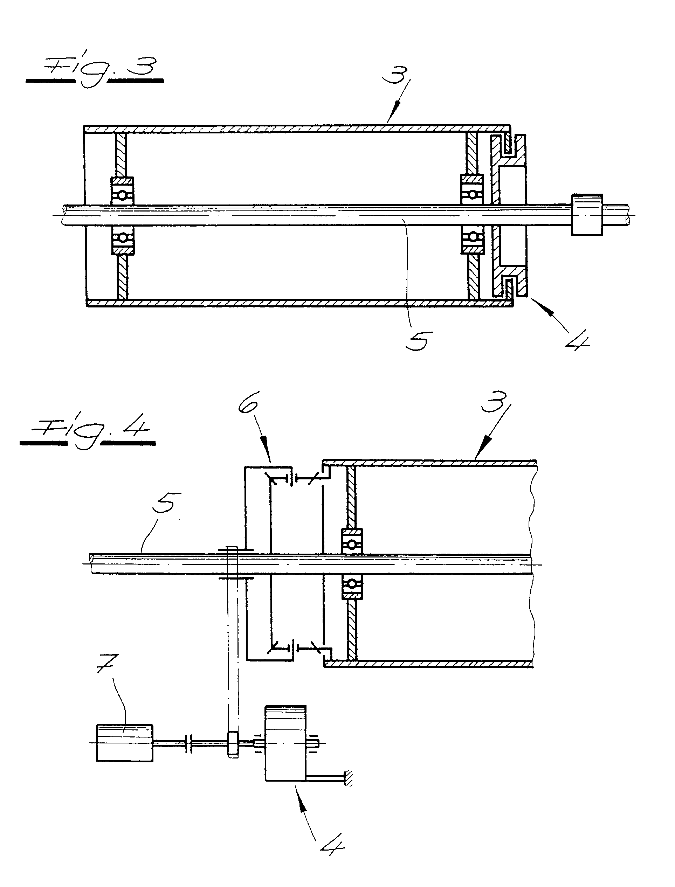

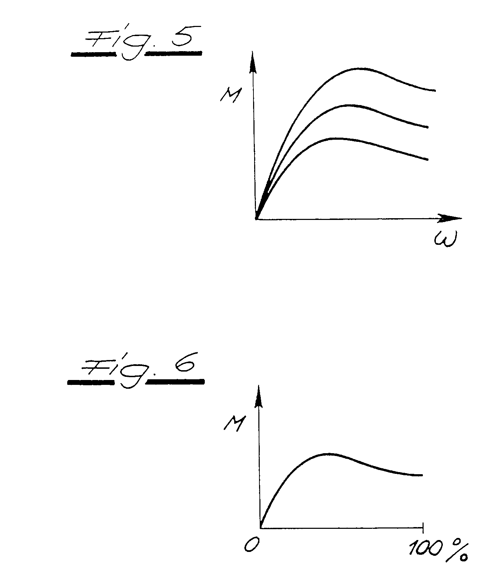

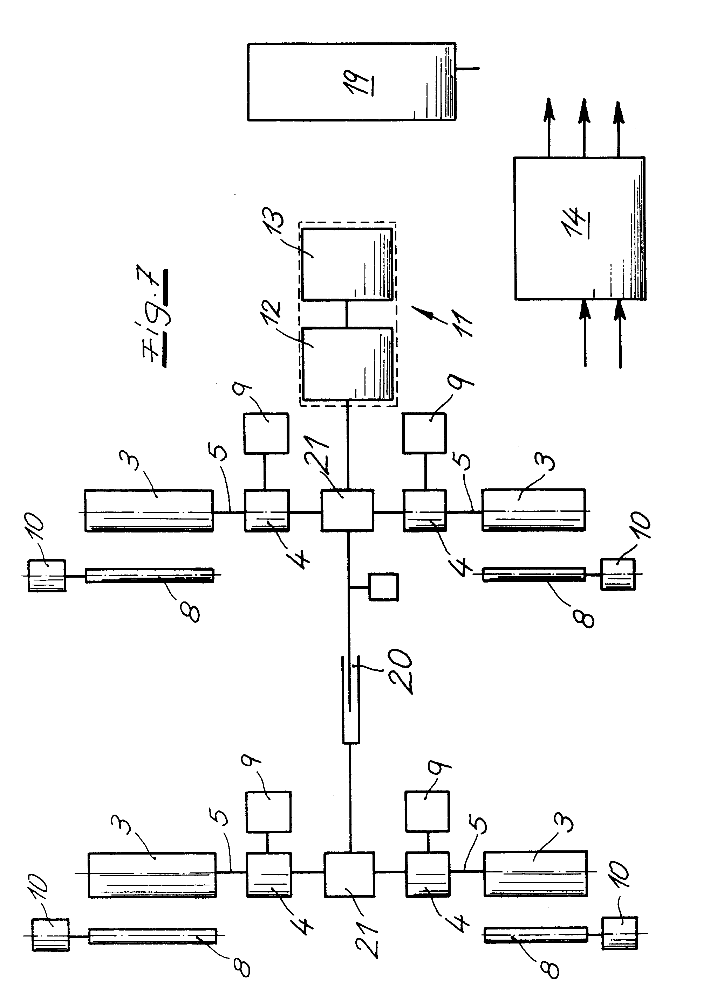

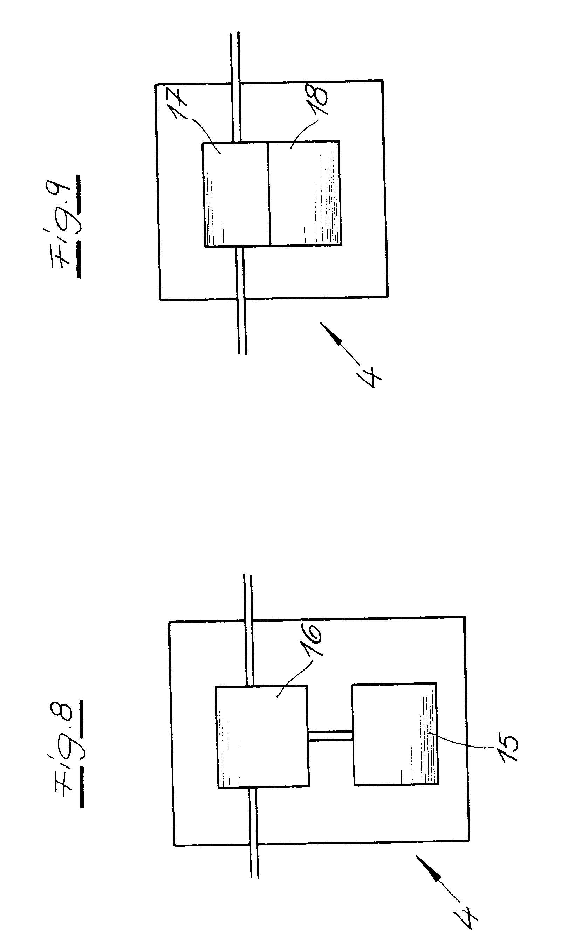

In den Fig. 1 bis 6 ist ein Bremsprüfstand für Kraftfahrzeuge, insbes. für Fahrzeuge 1 mit ABS-Bremsanlagen dargestellt. Dieser Bremsprüfstand weist in seinem grundsätzlichen Aufbau an den zu prüfenden Fahrzeugrädern 2 anliegende Treibrollen 3 auf, wobei den angetriebenen Treibrollen 3 jeweils ein in seiner Schlupfcharakteristik einstellbares Schlupfelement 4 zur bremsmomentabhängigen Änderung des Antriebsmomentes zwischen Fahrzeugrad 2 und Treibrolle 3 unter Aufrechterhaltung der Haftbedingungen zwischen Fahrzeugrad 2 und Treibrolle 3 zugeordnet ist. Die Treibrollen 3 sind über ihre Antriebswellen miteinander gekoppelt und während des simulierten Bremsvorganges über die Schwungmassen der rotierenden Teile des Bremsprüfstandes angetrieben. Die Schlupfelemente sind als unabhängig voneinander regelbare Wirbelstrombremsen 4 ausgebildet. Die Treibrollen 3 lassen sich von dem Fahrzeugmotor des auf dem Bremsprüfstand befindlichen Fahrzeuges 1 auf Prüfgeschwindigkeit beschleunigen und laufen dann sämtlich mit gleicher Drehzahl um. Nach dem Auskuppeln des Fahrzeugmotors kann eine Abbremsung der mit Fahrgeschwindigkeit umlaufenden Treibrollen 3 auf Null erfolgen. Das auf das betreffende Fahrzeugrad 2 über die Schwungmassen der rotierenden Teile und schließlich Treibrolle 3 wirkende Antriebsmoment wird beim Bremsvorgang in Abhängigkeit eines auf das Fahrzeugrad 2 wirkenden Bremsmomentes zur Simulation eines Schlupfes verändert, ohne daß sich die Haftbedingungen zwischen Fahrzeugrad 2 und Treibrolle 3 ändern. Die Änderung des Antriebsmomentes unter Einwirkung des Bremsmomentes entspricht im wesentlichen vorgebbaren Haft- und Schlupfbedingungen zwischen Fahrzeugrad 2 und Fahrbahnoberfläche. Das Vorgeben der Haft- und Schlupfbedingungen bzw. des zugehörigen Antriebsmomentes erfolgt durch Regelung der Wirbelstrombremse 4. Das ist möglich, weil sich durch die Steuerung des Erregerstromes unterschiedliche Schlupfcharakteristiken simulieren lassen. Das Simulieren unterschiedlicher Schlupfcharakteristiken durch Steuerung des Erregerstromes wiederum ist möglich, weil die Kennlinie einer Wirbelstrombremse einer Schlupfkurve entspricht und in beiden Fällen eine weitgehende übereinstimmende Momentabhängigkeit besteht.

Die Wirbelstrombremsen 4 können zwischen den Treibrollen 3 und ihren Antriebswellen 5 angeordnet sein. Nach einem bevorzugten Ausführungsbeispiel ist jedoch vorgesehen, daß die Wirbelstrombremsen 4 getrennt von den Treibrollen 3 installiert sind und jede Wirbelstrombremse 4 unter Zwischenschaltung eines Differentialgetriebes 6 auf die zugeordnete Treibrolle 3 einwirkt, wobei das Differentialgetriebe 6 einerseits an die Treibrolle 3, andererseits an deren Antriebswelle 5 angeschlossen und von der Wirbelstrombremse 4 beaufschlagt ist. An jede Treibrolle 3 ist ein in Abhängigkeit von ihrer Umlaufgeschwindigkeitsänderung geregelter Antrieb 7 zur Schwungmassenkompensation der mit der Treibrolle 3 rotierenden Teile angeschlossen. Ferner sind die Wirbelstrombremsen 4 jeweils mit einer Drehmomentmeßeinrichtung ausgerüstet. Bei dem dargestellten Zweiachs-Bremsprüfstand ist der Achsabstand A verstellbar. Jeder der Rollensätze weist eine Treibrolle 3 und eine Stützrolle 8 auf. Die Stützrollen 8 dienen zur Messung der Radgeschwindigkeiten.

In den Fig. 7 bis 9 ist ein Prüfstand dargestellt, der als Fahrsimulator ausgebildet ist. Dazu sind an die Schlupfelemente 4 Drehmomentsensoren 9 und an die Stützrollen 8 Drehzahlsensoren 10 angeschlossen. Auf die Antriebswellen 5 für die Treibrollen 3 arbeitet ein steuerbarer Energiespeicher 11 mit einer mechanischen Schwungmasse 12 sowie einem Antriebs- und Bremselement 13. Ein elektronisches Steuergerät 14 empfängt die Signale der Drehmomentsensoren 9 und Drehzahlsensoren 10, verarbeitet diese Signale und steuert die Schlupfelemente 4 und das Antriebs- und Bremselement 13 des Energiespeichers 11. Die Schlupfelemente sind bei dieser Ausführungsform nach den Fig. 8 und 9 als steuerbare elektrische oder hydraulische Maschinen 15 mit Differentialgetriebe 16 oder als steuerbare elektrische Maschinen 17 mit Schleifringübertrager 18 ausgebildet. Derartige Maschinen können auch bei dem vorbeschriebenen Bremsprüfstand als Schlupfelemente 4 eingesetzt werden. Der Fahrsimulator weist außerdem einen Ventilator 19 zur Fahrwindsimulation auf. Der Ventilator 19 ist ebenfalls von dem elektronischen Steuergerät 14 in Abhängigkeit von den verarbeiteten Signalen der Drehzahlsensoren 10 gesteuert. Der Energiespeicher 11 treibt über eine längenverstellbare Zentralwelle 20 unter Zwischenschaltung von Differentialgetrieben 21 die Antriebswellen 5 der Treibrollen 3 an. Die längenverstellbare Zentralwelle 20 ermöglicht einen einstellbaren Achsabstand.

## Patentansprüche

1. Prüfstand für Kraftfahrzeuge (1), insbes. Bremsprüfstand für Kraftfahrzeuge mit ABS-Bremsanlagen, mit an jedes Fahrzeugrad (2) anlegbarer Treibrolle (3) und Stützrolle (8), wobei den Treibrollen (3) ein jeweils in seiner Schlupfcharakteristik einstellbares Schlupfelement (4) zur bremsmomentenabhängigen Änderung des Antriebsmomentes zwischen Fahrzeugrad (2) und Treibrolle (3) unter Aufrechterhaltung der Haftbedingungen zwischen Fahrzeugrad (2) und Treibrolle (3) zugeordnet ist, **dadurch gekennzeichnet,** daß die Treibrollen (3) miteinander gekoppelt (4, 5, 20, 21) und während eines simulierten Bremsvorganges über Schwungmassen rotierender Teile des Prüfstandes antreibbar sind, wobei für die Treibrollen (3) ein gemeinsames Antriebselement (13) vorgesehen ist, und daß die Schlupfelemente (4) als unabhängig voneinander steuerbare elektrische oder hydraulische Maschinen (15) ohne Antriebsfunktion für die Treibrollen mit Differentialgetriebe (16) oder als unabhängig voneinander steuerbare elektrische Maschinen (17) ohne Antriebsfunktion mit Schleifringübertrager (18) ausgebildet sind.

2. Prüfstand nach Anspruch 1, dadurch gekennzeichnet, daß die Treibrollen (3) von dem Fahrzeugmotor des auf dem Bremsprüfstand befindlichen Fahrzeuges (1) auf Prüfgeschwindigkeit beschleunigbar sind.

3. Prüfstand nach Anspruch 1, dadurch gekennzeichnet, daß für sämtliche Treibrollen (3) ein gemeinsamer Antriebsmotor vorgesehen ist.

4. Prüfstand nach einem der Ansprüche 1 bis 3, dadurch gekennzeichnet, daß die Schlupfelemente als unabhängig voneinander steuerbare Wirbelstrombremsen (4) ausgebildet sind.

5. Prüfstand nach einem der Ansprüche 1 bis 4, dadurch gekennzeichnet, daß die Wirbelstrombremsen (4) jeweils zwischen der Treibrolle (3) und ihrer Antriebswelle (5) angeordnet sind, und daß die Treibrollen (3) auf ihren Lagerwellen (5) drehbar gelagert sind.

6. Prüfstand nach einem der Ansprüche 1 bis 4, dadurch gekennzeichnet, daß die Wirbelstrombremsen (4) getrennt von den Treibrollen (3) installiert sind und jede Wirbelstrombremse (4) unter Zwischenschaltung eines Differentialgetriebes (6) auf die zugeordnete Treibrolle (3) einwirkt, wobei das Differentialgetriebe (6) einerseits an die Treibrolle (3), andererseits an ihre Antriebswelle (5) angeschlossen und von der Wirbelstrombremse (4) beaufschlagt ist.

7. Prüfstand nach einem der Ansprüche 1 bis 6, dadurch gekennzeichnet, daß an jede Treibrolle (3) ein in Abhängigkeit von der Umlaufgeschwindigkeitsänderung der zugeordneten Treibrolle (3) geregelten Antrieb (7) zur Schwungmassenkompensation der mit der Treibrolle (3) rotierenden Teile angeschlossen ist.

8. Prüfstand nach einem der Ansprüche 1 bis 7, dadurch gekennzeichnet, daß die Wirbelstrombremsen (4) jeweils mit einer Drehmomentmeßeinrichtung ausgerüstet sind.

9. Prüfstand nach einem der Ansprüche 1 bis 3, dadurch gekennzeichnet, daß der Prüfstand als Fahrsimulator ausgebildet ist und dazu an die Schlupfelemente (4) Drehmomentsensoren (9) und an die Stützrollen (8) Drehzahlsensoren (10) angeschlossen sind, daß auf die Antriebswellen (5) für die Treibrollen (3) ein steuerbarer Energiespeicher (11) mit einer mechanischen Schwungmasse (12) sowie einem Antriebs- und Bremselement (13) arbeitet, und daß ein elektronisches Steuergerät (14) die Signale der Drehmomentsensoren (9) und Drehzahlsensoren (10) empfängt und in Abhängigkeit von den verarbeiteten Signalen die Schlupfelemente (14) und das Antriebs- und Bremselement (13) des Energiespeichers (11) steuert.

10. Prüfstand nach einem der Ansprüche 1 bis 3 oder 9, dadurch gekennzeichnet, daß der Fahrsimulator einen Ventilator (19) zur Fahrwindsimulation aufweist, und daß der Ventilator (19) von dem elektronischen Steuergerät (14) in Abhängigkeit von den verarbeiteten Signalen der Drehzahlsensoren (10) gesteuert ist.

11. Prüfstand nach einem der Ansprüche 1 bis 3 oder 9, 10, dadurch gekennzeichnet, daß der Energiespeicher (11) über eine längenverstellbare Zentralwelle (20) unter Zwischenschaltung von Differentialgetrieben (21) die Antriebswellen (5) der Treibrollen (3) antreibt.

## Claims

1. A test bed for motor vehicles (1), particularly a brake test bed for motor vehicles with ABS brake units, with a drive roller (3) and a support roller (8) which can be placed on each vehicle wheel (2), wherein a slip element (4), the slip characteristic of which can be adjusted in each case, is associated with the drive rollers (3) for varying the drive torque between the vehicle wheel (2) and the drive roller (3) depending on the braking moment, with the adhesion conditions between the vehicle wheel (2) and the drive roller (3) being maintained, characterised in that the drive rollers (3) are coupled to each other (4, 5, 20, 21) and can be driven during a simulated braking operation by the rotating masses of rotating parts of the test bed, wherein a common drive element (13) is provided for the drive rollers (3), and that the slip elements (4) are constructed as electrical or hydraulic machines (15), which can be controlled independently of each other, with a differential gear (16) and without a drive function in relation to the drive rollers, or as electrical machines (17), which can be controlled independently of each other, with a slip ring transmission device (18) and without a drive function,.

2. A test bed according to claim 1, characterised in that the drive rollers (3) can be accelerated to the test speed by the vehicle engine of the vehicle (1) located on the brake test bed.

3. A test bed according to claim 1, characterised in that a common drive motor is provided for all the drive rollers (3).

4. A test bed according to any one of claims 1 to 3, characterised in that the slip elements are constructed as eddy current brakes (4) which can be controlled independently of each other.

5. A test bed according to any one of claims 1 to 4, characterised in that the eddy current brakes (4) are disposed between each drive roller (3) and its drive shaft (5), and that the drive rollers (3) are rotatably mounted on their bearing shafts (5).

6. A test bed according to any one of claims 1 to 4, characterised in that the eddy current brakes (4) are installed separately from the drive rollers (3) and each eddy current brake (4) acts on the associated drive roller (3) with a differential gear (6) interposed therebetween, wherein the differential gear is connected on one side to the drive roller (3) and on the other side to its drive shaft (5) and is acted upon by the eddy current brake (4).

7. A test bed according to any one of claims 1 to 6, characterised in that a drive (7), which is adjusted depending on the variation in rotational speed of the associated drive roller (3), is connected to each drive roller (3) in order to compensate for the rotating masses of the parts rotating with the drive roller (3).

8. A test bed according to any one of claims 1 to 7, characterised in that the eddy current brakes (4) are each equipped with a torque measuring device.

9. A test bed according to any one of claims 1 to 3, characterised in that the test bench is designed as a travel simulator and for this purpose torque sensors (9) are attached to the slip elements (4) and rotational speed sensors (10) are attached to the support rollers (8), that a controllable energy store (11) with a mechanical rotating mass (12) and a driving- and braking element (13) acts on the drive shafts (5) for the drive rollers (3), and that an electronic control unit (14) receives the signals from the torque sensors (9) and rotational speed sensors (10) and controls the slip elements (4) and the driving- and braking element (13) of the energy store (11) depending on the processed signals.

10. A test bed according to any one of claims 1 to 3 or claim 9, characterised in that the travel simulator has a fan (19) for simulating the wind due to motion, and that the fan (19) is controlled by the electronic control unit (14) depending on the processed signals from the rotational speed sensors (10).

11. A test bed according to any one of claims 1 to 3, or 9 or 10, characterised in that the energy store (11) drives the drive shafts (5) of the drive rollers (3) via a central shaft (20) of adjustable length, with differential gears (21) interposed therebetween.

## Revendications

1. Banc d'essai pour véhicules (1), en particulier banc d'essai de freinage pour véhicules équipés d'installations de freinage ABS, équipé de rouleaux d'entraînement (3) pouvant être appliqués à chaque roue du véhicule (2) et de rouleaux d'appui (8), dans lequel aux rouleaux d'entraînement (3) est associé un élément de glissement (4) réglable selon sa caractéristique de glissement en vue de la modification,en fonction du moment de freinage,du moment d'entraînement entre la roue du véhicule (2) et le rouleau d'entraînement (3) avec maintien des conditions d'adhérence entre la roue du véhicule (2) et le rouleau d'entraînement (3), caractérisé en ce que les rouleaux d'entraînement (3) sont couplés les uns aux autres (4, 5, 20, 21) et peuvent être entraînés durant un processus de freinage simulé par l'intermédiaire de parties rotatives par inertie du banc d'essai, dans lequel pour les rouleaux d'entraînement (3) est prévu un élément d'entraînement commun (13), et en ce que les éléments de glissement (4) sont réalisés sous la forme de machines (15) électriques ou hydrauliques pouvant être commandées indépendamment les unes des autres sans fonction d'entraînement pour les rouleaux d'entraînement avec mécanisme différentiel (16) ou en tant que machines (17) électriques pouvant être commandées indépendamment les unes des autres sans fonction d'entraînement avec transformateur à bague collectrice (18).

2. Banc d'essai selon la revendication 1, caractérisé en ce que les rouleaux d'entraînement (3) peuvent être accélérés par le moteur du véhicule (1) se trouvant sur le banc d'essai à la vitesse d'essai.

3. Banc d'essai selon la revendication 1, caractérisé en ce que pour la totalité des rouleaux d'entraînement (3) est prévu un moteur d'entraînement commun.

4. Banc d'essai selon l'une quelconque des revendications 1 à 3, caractérisé en ce que les éléments de glissement sont réalisés sous la forme de freins à courant de Foucault (4) pouvant être commandés indépendamment les uns des autres.

5. Banc d'essai selon l'une quelconque des revendications 1 à 4, caractérisé en ce que les freins à courant de Foucault (4) sont disposés respectivement entre le rouleau d'entraînement (3) et son arbre d'entraînement (5), et en ce que les rouleaux d'entraînement (3) sont disposés rotatifs sur leurs arbres d'appui (5).

6. Banc d'essai selon l'une quelconque des revendications 1 à 4, caractérisé en ce que les freins a courant de Foucault (4) sont disposés séparement des rouleaux d'entraînement (3) et chaque frein a courant de Foucault (4) agit par interposition d'un mécanisme différentiel (6) sur le rouleau d'entraînement associé (3), le mécanisme différentiel (6) étant relié d'une part au rouleau d'entraînement (3), d'autre part à son arbre d'entraînement (5) et alimenté par les freins à courant de Foucault (4).

7. Banc d'essai selon l'une quelconque des revendications 1 à 6, caractérisé en ce qu'à chaque rouleau d'entraînement (3) est relié un entraînement (7) commandé en fonction de la variation de vitesse de rotation du rouleau d'entraînement associé (3) en vue de la compensation de la masse d'inertie des parties tournant avec le rouleau d'entraînement (3).

8. Banc d'essai selon l'une quelconque des revendications 1 à 7, caractérisé en ce que les freins a courant de Foucault (4) sont équipés chacun d'un dispositif de mesure de moment de rotation.

9. Banc d'essai selon l'une quelconque des revendications 1 à 3, caractérisé en ce que le banc d'essai est réalisé sous la forme d'un simulateur de conduite et aux éléments de glissement (4) sont reliés des capteurs de moment de rotation (9) et aux rouleaux d'appui (8) sont reliés des capteurs de vitesse de rotation (10), en ce que sur les arbres d'entraînement (5) pour les rouleaux d'entraînement (3) opère un accumulateur d'énergie (11) pouvant être commandé avec une masse d'inertie mécanique (12) ainsi qu'un élément d'entraînement et de freinage (13), et en ce qu'un dispositif de commande électronique (14) reçoit les signaux des capteurs de moment de rotation (9) et des capteurs de vitesse de rotation (10) et en fonction des signaux traités commande les éléments de glissement (14) et l'élément d'entraînement et de freinage (13) de l'accumulateur d'énergie (11).

10. Banc d'essai selon l'une quelconque des revendications 1 à 3 ou 9, caractérisé en ce que le simulateur de conduite comporte un ventilateur (19) en vue de la simulation de vent de conduite, et en ce que le ventilateur (19) est commandé par le dispositif de commande électronique (14) en fonction des signaux traités des capteurs de vitesse de rotation (10).

11. Banc d'essai selon l'une quelconque des revendications 1 à 3 ou 9, 10, caractérisé en ce que l'accumulateur d'énergie (11) entraîne, par l'intermédiaire d'un arbre central réglable en longueur (20) avec interposition de mécanismes différentiels (21), les arbres d'entraînement (5) des rouleaux d'entraînement (3).
